# FASCICULE DE BREVET EUROPEEN

(11) **EP 3 380 793 B1**
(45) Date de publication et mention de la délivrance du brevet: **29.07.2020**
(21) Numéro de dépôt: 16813008.6
(22) Date de dépôt: 23.11.2016
(51) Int. Cl.: F24D 19/08, B60H 1/32

(54) **KIT DE GUIDAGE ET RETENTION DE MATIÈRE, NOTAMMENT LIQUIDE**
KIT ZUM FÜHREN UND EINLAGERN VON MATERIAL, INSBESONDERE FLÜSSIGKEIT
KIT FOR GUIDING AND RETAINING MATERIAL, NOTABLY LIQUID

(30) Priorité: 23.11.2015 FR 1561272
(43) Date de publication de la demande: 03.10.2018
(73) Titulaire: Ragone, Jean Louis, 13380 Plan de Cuques (FR)
(72) Inventeur: Ragone, Jean Louis, 13380 Plan de Cuques (FR)
(74) Mandataire: Cornuejols, Georges
(86) Numéro de dépôt international: PCT/FR2016/053062
(87) Numéro de publication internationale: WO 2017/089704

(56) Documents cités:
- EP-A1- 0 562 847
- FR-A1- 3 009 600
- US-A1- 2004 227 347

## Description

### DOMAINE TECHNIQUE DE L'INVENTION

La présente invention vise un kit de guidage et rétention de matière, notamment liquide.

Elle s'applique, notamment, dans les domaines de la plomberie, du ramonage ou de la menuiserie. Plus particulièrement, l'invention s'applique pour tout domaine dans lequel un fluide doit être guidé, dans le cas de vidanges par exemple.

### ETAT DE LA TECHNIQUE

Actuellement, pour guider un liquide dont la source est difficile d'accès, tel un robinet de purge d'un chauffe-eau ou d'un radiateur, des utilisateurs utilisent des dispositifs rigides difficiles à positionner. De plus, ces dispositifs rigides n'ont pas la dimension ou les formes permettant de les placer proche des angles de murs ou à faible distance du sol. En outre, la rigidité de tels dispositifs limite la quantité de liquide qui peut être contenue dans le dispositif. Donc, si une grande quantité de liquide est à prévoir, le dispositif doit avoir des dimensions considérables ce qui rend la manutention d'un tel dispositif encore moins aisée tant lorsque le dispositif est vide que lorsque le dispositif est au moins partiellement rempli.

On connaît les documents FR 3 009 600 et US 2004/227347 qui décrivent des dispositifs de rétention d'eau à fixer à des canalisations lors d'interventions. Ces dispositifs sont complexes à utiliser et imposent des manipulations longues. Le document US 2004/0227347 divulgue un kit de guidage et de rétention de matière, notamment liquide, qui comporte au moins un dispositif comportant, sur une courbe fermée:
- une mâchoire périphérique dite « première mâchoire» présentant un profilé,
- une mâchoire amovible dite « deuxième mâchoire» de profilé correspondant, au moins partiellement, au profilé de la première mâchoire, la mâchoire amovible s'emboîtant, au moins partiellement, avec le profilé de la première mâchoire, et
- une poignée de manutention liée à la première mâchoire pour manipuler le dispositif.

### OBJET DE L'INVENTION

La présente invention vise à remédier à tout ou partie de ces inconvénients.

A cet effet, selon un premier aspect, la présente invention vise un kit selon la revendication 1.

Grâce à ces dispositions, le film plastique est maintenu entre les mâchoires et l'ouverture de la première mâchoire permet de guider aisément le dispositif autour de la source de matière, notamment liquide, afin qu'il n'y ait pas de fuites et que l'intégralité de la matière soit contenue dans le sac étanche. De plus, le dispositif étant un guide, l'ouverture est maintenue surélevée par rapport au film en matériau étanche et seules les dimensions du film limitent la capacité de stockage de la matière.

Dans des modes de réalisation, la courbure du profilé de la première mâchoire, change au moins deux fois de signe.

Grâce à ces dispositions, le film étanche est bien maintenu entre les mâchoires du dispositif et un risque de glissement du film entre les mâchoires est évité.

Dans des modes de réalisation, la courbe fermée est planaire.

Ces modes de réalisation présentent l'avantage de pouvoir disposer aisément le dispositif autour de surfaces planes tels des murs, par exemple.

Dans des modes de réalisation, la courbe fermée est de forme générale rectangulaire.

L'avantage de ces modes de réalisation est d'avoir une manutention plus aisée pour l'utilisateur.

Dans des modes de réalisation, la poignée de manutention comporte des renforts de matière.

Grâce à ces dispositions, la poignée peut résister à des efforts de flexion plus importants.

Dans des modes de réalisation, au moins une mâchoire est en PVC (acronyme de « Poly(Chlorure de Vinyle) »)

L'avantage de ces modes de réalisation est de rendre le dispositif peu onéreux à la fabrication. De plus, le dispositif est léger et donc plus aisément manipulé par un utilisateur, tout en présentant des caractéristiques techniques suffisantes.

Dans des modes de réalisation, au moins une mâchoire est fabriquée par moulage.

Ces modes de réalisation permettent de fabriquer les dispositifs en grande séries.

Dans des modes de réalisation, le film étanche comporte un robinet de vidange.

De tels films étanches permettent de guider le liquide, de sa source à un endroit déterminé tel un égout, ou un ou plusieurs récipients, en contrôlant la quantité de liquide versée.

Dans des modes de réalisation, le film étanche est en matière plastique au moins partiellement transparente aux longueurs d'onde visible.

L'avantage de ces modes de réalisation est de permettre à un utilisateur de percevoir les limites de la matière dans le sac étanche afin de le refermer pour le déplacer sans se tromper.

Dans des modes de réalisation, le dispositif du kit objet de la présente invention comporte une pelle.

Grâce à ces dispositions, par glissement sur une surface supportant une matière à collecter, on collecte une partie de cette matière.

Dans des modes de réalisation, au moins une des mâchoires présente une forme globalement rectangulaire, aux sommets éventuellement arrondis ou aplatis pour former un octogone, la longueur du petit côté de cette forme rectangulaire étant préférentiellement comprise entre 15 et 25 centimètres.

Dans des modes de réalisation, au moins une des mâchoires présente une forme globalement rectangulaire, aux sommets éventuellement arrondis ou aplatis pour former un octogone, la longueur du grand côté de cette forme rectangulaire étant préférentiellement comprise entre 21 et 35 centimètres.

L'inventeur a déterminé que ces dimensions permettent une collecte sur une large surface sans encombrement excessif.

Dans des modes de réalisation, le dispositif du kit objet de la présente invention est muni de pieds.

Dans des modes de réalisation, le dispositif du kit objet de la présente invention est muni de fils, cordes ou sangles de suspension.

Dans des modes de réalisation, le dispositif du kit objet de la présente invention est muni d'une ceinture.

Grâce à chacune de ces dispositions, le dispositif peut être maintenu en position d'utilisation sans que l'utilisateur n'ait à le tenir par sa poignée.

Dans des modes de réalisation, le dispositif du kit objet de la présente invention est muni d'une source de lumière, d'une alimentation électrique pour cette source de lumière et d'un interrupteur.

L'utilisateur peut ainsi éclairer la zone d'intervention, notamment lorsqu'elle est dans l'ombre, par exemple derrière un chauffe-eau, un ballon d'eau chaude ou un radiateur, sous un évier, un lavabo ou une baignoire.

### BREVE DESCRIPTION DES FIGURES

D'autres avantages, buts et caractéristiques particulières de l'invention ressortiront de la description non limitative qui suit d'au moins un mode de réalisation particulier d'un kit de guidage de matière, notamment un liquide, en regard des dessins annexés, dans lesquels :
- la figure 1 représente, schématiquement et en plan, un premier mode de réalisation particulier du dispositif du kit objet de la présente invention,
- la figure 2 représente, schématiquement, une section du premier mode de réalisation particulier du dispositif du kit objet de la présente invention,
- la figure 3 représente, schématiquement et en vue de dessous, une troisième vue du premier mode de réalisation particulier du dispositif du kit objet de la présente invention,
- la figure 4 représente, schématiquement et en plan, un premier mode de réalisation particulier d'un kit objet de la présente invention et
- la figure 5 représente, en vue en plan et de côtés, une variante du dispositif illustré en figures 1 à 3.

### DESCRIPTION D'EXEMPLES DE REALISATION DE L'INVENTION

La présente description est donnée à titre non limitatif, chaque caractéristique d'un mode de réalisation pouvant être combinée à toute autre caractéristique de tout autre mode de réalisation de manière avantageuse. Par ailleurs, chaque paramètre d'un exemple de réalisation peut être mis en œuvre indépendamment d'autres paramètres dudit exemple de réalisation.

On note dès à présent que les figures sont à l'échelle.

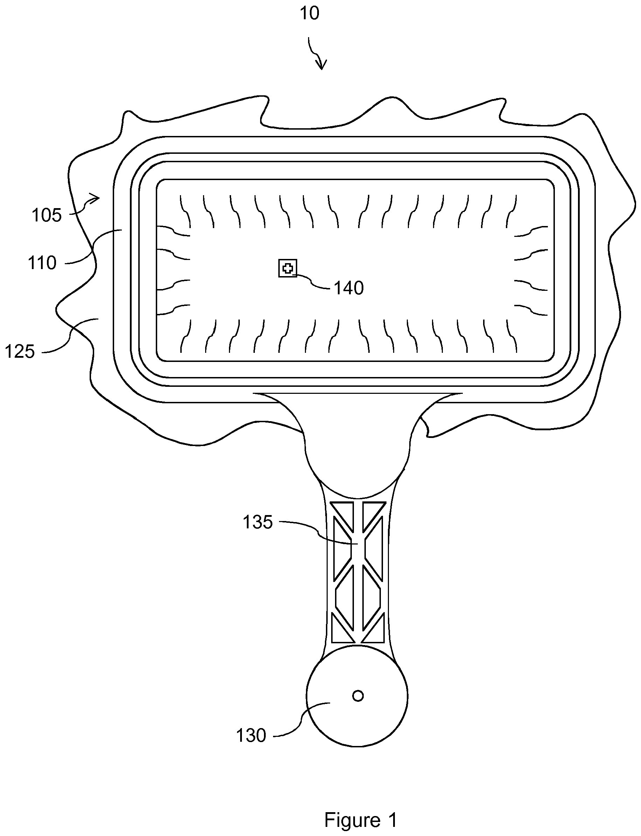

On observe, sur la figure 1, qui est à l'échelle, une vue schématique d'un mode de réalisation du dispositif 10 de guidage du kit objet de la présente invention.

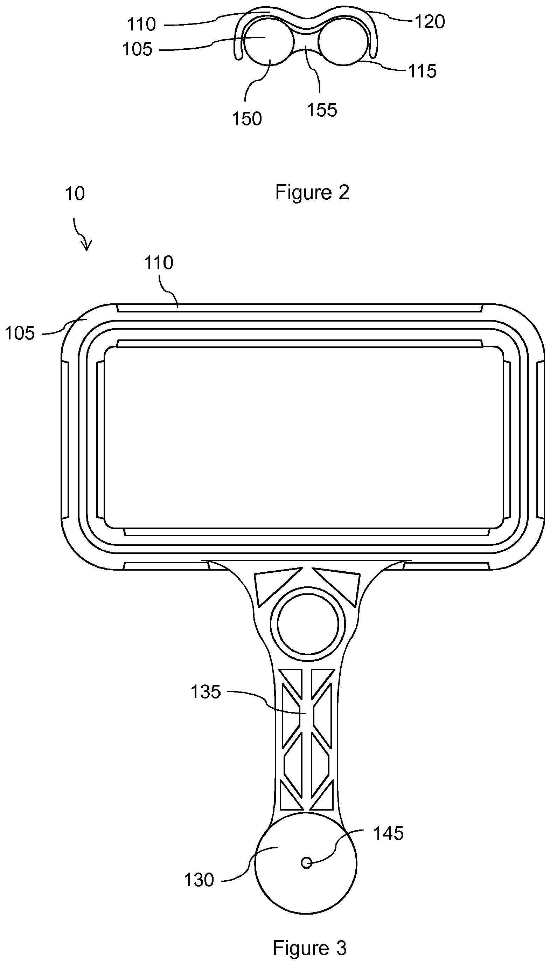

Le dispositif 10 de guidage comporte, sur une courbe fermée, une mâchoire périphérique 105, dite « première mâchoire », qui suit la courbe fermée ou qui est intermittente, par exemple présente uniquement dans les quatre parties droites de la courbe fermée représentées en figure 3. Préférentiellement, le profilé 115 de la première mâchoire 105 présente des dimensions constantes. Dans le mode de réalisation représenté en figure 2, la première mâchoire 105 présente une section, ou profilé 105 en forme de « 8 », c'est-à-dire de deux disques 150 reliés par une jonction 155 plus fine que le diamètre des disques.

Préférentiellement, la périphérie du dispositif 10 est planaire. Ces modes de réalisation permettent de positionner plus aisément le dispositif contre une surface plane, telle un mur, par exemple.

Préférentiellement, la périphérie du dispositif 10 est de forme générale rectangulaire, à sommets arrondis ou aplatis pour former un octogone, pour que le dispositif 10 soit aisément disposé horizontalement contre un mur. La périphérie peut être un rectangle.

Dans des modes de réalisation préférentiels, la courbure du profilé 115 de la première mâchoire 105, change au moins deux fois de signe. Le profilé 115 de la première mâchoire est préférentiellement une forme comportant deux extrémités et une jonction entre les deux extrémités. La jonction créant un creux dans le profilé 115. Préférentiellement, les extrémités sont en arcs de cercle et la jonction comporte au moins un arc de cercle de courbure inverse. Un tel changement de signe dans la courbure du profilé 115 de la première mâchoire 105 entraîne un pincement efficace d'un film étanche formant sac de rétention de matière. Préférentiellement, la première mâchoire est en PVC (acronyme de « Poly(Chlorure de Vinyle) »).

Le dispositif 10 comporte une mâchoire amovible 110 dite «deuxième mâchoire » de profilé 120 correspondant, au moins partiellement, au profilé 115 de la première mâchoire 105, s'emboîtant avec la première mâchoire 105 et bloquant un film 125 en matériau étanche. Préférentiellement, la souplesse de la matière dans laquelle la deuxième mâchoire 110 est réalisée permet à la mâchoire 110 de se déformer par appui manuel. Cette déformation élastique permet à la deuxième mâchoire 110 de franchir la plus grande dimension du profilé 115 de la première mâchoire 105 et de se maintenir dans cette position emboîtée dans laquelle le film 125 est pincé entre les deux mâchoires 105 et 110. L'ouverture, c'est-à-dire la séparation, des mâchoires 105 et 110 se fait par application d'une pression manuelle inverse.

Préférentiellement, le profilé 120 de la deuxième mâchoire 110 présente des dimensions constantes sur toute la longueur de la mâchoire.

Préférentiellement, la première et la deuxième mâchoires sont, chacune, dans un plan et de forme générale rectangulaire, éventuellement à sommets arrondis ou aplatis pour former un octogone. Ces modes de réalisation permettent de positionner plus aisément la deuxième mâchoire 110 sur la première mâchoire 105.

Dans des modes de réalisation préférentiels, la courbure du profilé 120 de la deuxième mâchoire 110, change au moins deux fois de signe, c'est-à-dire présente deux points d'inflexion. Préférentiellement, les extrémités sont en arcs de cercle et la jonction comporte au moins un arc de cercle de courbure inverse. Le profilé 120 de la première mâchoire est préférentiellement une forme comportant deux extrémités et une jonction entre les deux extrémités. Un tel changement de signe dans la courbure du profilé 115 de la première mâchoire 105, c'est-à-dire un point d'inflexion, entraîne un pincement efficace du film étanche 125.

La courbure du profilé 120 est similaire à la courbure du profilé 115 sur au moins une partie du profilé 120 pour que la première et la deuxième mâchoire, 105 et 110, créent un pincement du filme étanche 125.

Préférentiellement, le profilé 115 et le profilé 120 présentent un axe de symétrie.

Préférentiellement, la deuxième mâchoire 110 est en PVC (acronyme de « Poly(Chlorure de Vinyle) »).

Le dispositif 10 comporte une poignée de manutention 130 liée à la première mâchoire 105, ou en variante à la deuxième mâchoire 110, pour manipuler le dispositif 10. Préférentiellement, la poignée de manutention 130 est disposée sur un des plus grands côtés du rectangle définissant la courbe fermée, pour limiter le moment de la force de pesanteur due à la matière retenue dans le film étanche 125. La poignée de manutention 130 est longiforme. Les dimensions du raccordement de la poignée de manutention 130 à la première mâchoire 105 sont inférieures aux dimensions de la poignée de manutention 130 dans un axe perpendiculaire au raccordement.

La poignée de manutention 130 peut comporter des renforts de matière 135. Les renforts de matière 135 sont configurés pour être résistants en flexion lorsqu'un effort est appliqué sur la première mâchoire 105. Les renforts de matière sont des surplus au niveau de la poignée de manutention 130. Préférentiellement, pour une meilleure répartition des efforts, les renforts de matière 135 forment un angle à quarante-cinq degrés avec la direction des efforts de flexion.

La poignée de manutention 130 peut comporter un orifice circulaire 145 permettant de suspendre le dispositif 10 à un crochet ou une pointe. Préférentiellement, l'épaisseur de la poignée de manutention 130 est inférieure à la dimension des profilés 115 et 120 emboîtés.

Dans des modes de réalisation, la première mâchoire 105 et la deuxième mâchoire 110 sont articulées par une charnière. La charnière est préférentiellement sur un des plus grands côtés du rectangle définissant la périphérie du dispositif et l'embouchure du sac formé par le film 125 pincé entre les mâchoires 105 et 110. Cette charnière peut être un lien de matière de faible épaisseur et élastique entre la première mâchoire 105 et la deuxième mâchoire 110. La charnière peut être un emboitement d'une forme de la première mâchoire 105 avec une forme de la deuxième mâchoire 110 configurés pour créer une liaison pivot, telles, un arbre et un alésage, par exemple.

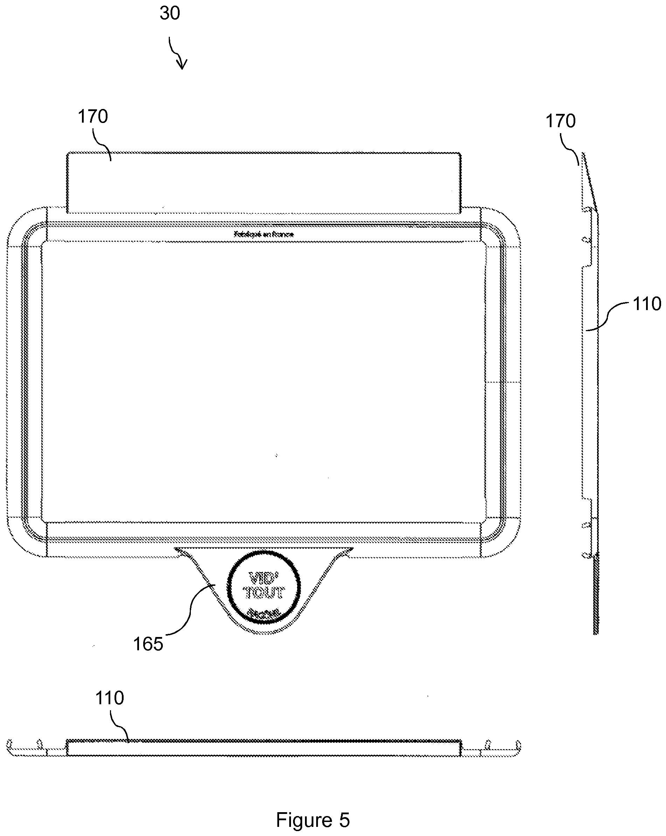

Préférentiellement, la deuxième mâchoire 110 comporte un cache 165 (voir figure 5) recouvrant au moins partiellement la poignée de manutention 130. Un tel cache 165 permet de maintenir les deux mâchoires 105 et 110 fermées lors de la manutention de l'objet afin de maintenir le film étanche 125 en position.

Préférentiellement, au moins une mâchoire, 105 ou 110, est fabriquée par moulage. L'empreinte pour la fabrication du moule correspond à la première mâchoire 105 du dispositif 10 raccordé à la poignée de manutention 130 et/ou à la deuxième mâchoire 110 du dispositif 10.

Dans des modes de réalisation, le film étanche 125 comporte un robinet de vidange 140. Le robinet de vidange 140 comporte une partie actionnable configurée pour contrôler l'arrêt ou l'écoulement du liquide contenu dans le sac étanche. Par exemple, le robinet de vidange 140 peut être raccordé à des moyens de stockage du liquide ou d'évacuation vers des égouts.

Préférentiellement, le film étanche 125 est en matière plastique au moins partiellement transparente aux longueurs d'onde visible.

Dans des modes de réalisation, le film étanche 125 est en textile plastifié, en matériau composite souple et recouvert d'une surface plastifiée ou sous la forme d'un film métallique recouvert d'une surface plastifiée.

Préférentiellement, la dimension des profilés 115 et 120 emboités selon un axe perpendiculaire au plan de la courbe fermée est inférieure à un centimètre.

Dans des modes de réalisation préférentielles, le dispositif 10

Le dispositif 10 peut être utilisé dans le cas suivants :
- la vidange de radiateurs,
- la vidange de clarinette de plancher chauffant,
- la vidange de clarinette d'eau chaude ou d'eau froide,
- la vidange de chauffe-eau,
- la vidange d'un ballon de chaudière située proche du sol,
- le nettoyage de siphons de plomberie,
- la purge de radiateurs, dans un angle de murs, par exemple,
- le nettoyage d'un siphon d'un appareil électroménager nécessitant la circulation d'un liquide, tels les machines à laver le linge ou la vaisselle,
- la vidange d'une chaudière à gaz,
- le nettoyage d'un filtre à fioul dans une chaudière à mazout ou
- la purge ou vidange d'éléments automobiles, tels les tambours de freins, par exemple.

Dans les cas cités ci-dessus, le dispositif 10 est placé proche de l'embouchure de laquelle le liquide s'écoule. Etant donné les faibles dimensions et la maniabilité du dispositif 10, le dispositif 10 peut facilement entourer l'embouchure et éviter toute souillure des éléments environnants.

De plus, ce sont les dimensions du film étanche 125 qui définissent la capacité de matière qui peut être retenue. Puisque le film étanche 125 repose sur une surface plane tel un sol ou un plan de travail, par exemple, la matière se réparti dans le film étanche 125 dans contraintes excessives pour le dispositif 10. Une fois la matière guidée dans le film étanche 125. Le film étanche 125 peut être refermé, détaché du dispositif 10 et déplacé pour être jeté. Dans d'autres modes de réalisation, le film étanche 125 est vidangé au moyen du robinet de vidange 140.

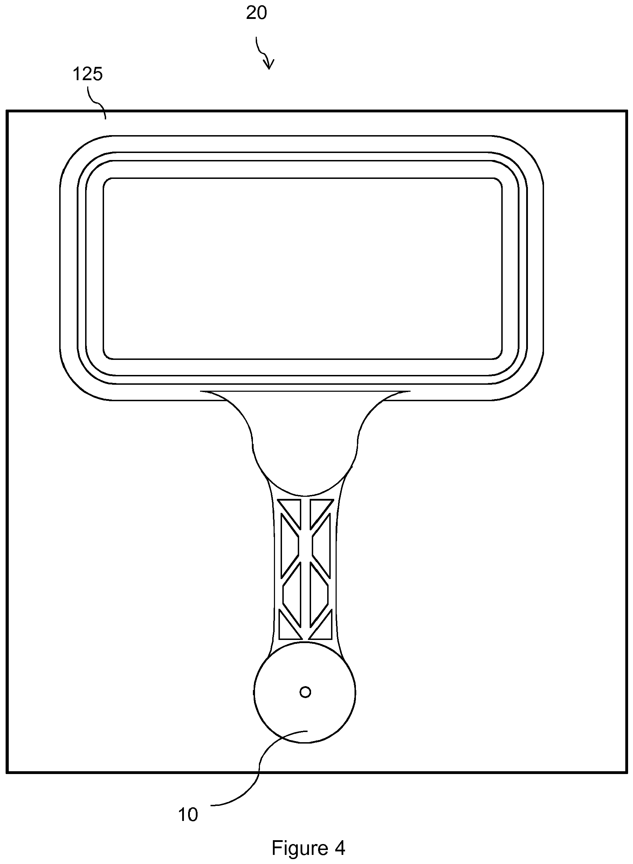

La figure 4 représente un kit 20 selon la présente invention comportant un dispositif de guidage 10 et au moins un film 125 en matériau étanche formant un sac étanche. Les dimensions du film 125 sont supérieures aux dimensions des mâchoires du dispositif de guidage. Selon l'invention, le film 125 prend la forme d'un sac, dont l'embouchure présente un périmètre supérieur au périmètre des mâchoires du dispositif 10, c'est-à-dire d'un chemin passant par toutes les mâchoires. Préférentiellement, le périmètre de l'embouchure du sac est compris entre 105 et 150 % du périmètre des mâchoires du dispositif 10.

On observe, en figure 5, une variante 30 du dispositif 10, qui comporte une pelle, ou raclette, 170 pour racler un support. Cette raclette 170 permet de ramasser de la matière en faisant glisser cette raclette 170 sur un support de cette matière. La raclette 170 est, préférentiellement, du côté opposé à la poignée de manutention 130.

La longueur, bord externe à bord externe, du petit côté de la partie rectangulaire du dispositif 30 portant les mâchoires est préférentiellement comprise entre 15 et 25 centimètres et, encore plus préférentiellement, entre 17 et 23 centimètres. La longueur, bord externe à bord externe, du grand côté de la partie rectangulaire du dispositif 30 portant les mâchoires est préférentiellement comprise entre 21 et 35 centimètres et, encore plus préférentiellement, entre 24 et 32 centimètres.

Dans des modes de réalisation, le kit objet de la présente invention est muni de pieds, préférentiellement escamotables ou amovibles, pour que le dispositif puisse tenir sur le sol en tenant l'embouchure du film étanche à au moins vingt centimètres du sol.

Dans des modes de réalisation, le kit objet de la présente invention est muni de fils, cordes ou sangles, préférentiellement amovibles, pour que le dispositif puisse être suspendu, par exemple à un radiateur en tenant l'embouchure du film étanche à au moins cinq centimètres de la fixation des fils, cordes ou sangles.

Dans des modes de réalisation, le kit objet de la présente invention est muni d'une ceinture, préférentiellement amovible, pour que le dispositif puisse tenir sur la hanche d'un utilisateur. Préférentiellement la fixation entre les mâchoires et la ceinture impose que l'angle entre leurs plans soit inférieur à 60°. De cette manière, l'embouchure du film est maintenue ouverte et l'utilisateur peut facilement disposer la matière dans le sac, sans avoir besoin d'ouvrir son embouchure.

Dans des modes de réalisation, le kit objet de la présente invention est muni d'une source de lumière, d'une alimentation électrique pour cette source de lumière et d'un interrupteur, préférentiellement positionné sur la poignée de manutention, pour alimenter la source de lumière. L'utilisateur peut ainsi éclairer la zone d'intervention, par exemple derrière un chauffe-eau, un ballon d'eau chaude ou un radiateur, sous un évier, un lavabo ou une baignoire, sans occuper une de ses mains avec une lampe. Cette source de lumière est, préférentiellement, une diode électroluminescente.

## Revendications

1. Kit (20) de guidage et rétention de matière, notamment liquide, comportant :
- au moins un sac formé par un film en matériau étanche (125) et
- au moins un dispositif (10, 30) comportant, sur une courbe fermée :
- une mâchoire périphérique (105) dite « première mâchoire » présentant un profilé (115),
- une mâchoire amovible (110) dite « deuxième mâchoire » de profilé (120) correspondant, au moins partiellement, au profilé (115) de la première mâchoire (105), la mâchoire amovible s'emboîtant, au moins partiellement, autour du profilé (115) de la première mâchoire (105), pour pincer le film (125) entre lesdits profilés et
- une poignée de manutention (130) solidaire d'au moins une des mâchoires pour manipuler le dispositif ;
le sac possédant un périmètre d'ouverture supérieur au périmètre des mâchoires du dispositif.

2. Kit (20) selon la revendication 1, dans lequel la courbure du profilé (115) de la première mâchoire (105), change au moins deux fois de signe.

3. Kit (20) selon l'une des revendications 1 ou 2, dans lequel la courbe fermée est planaire.

4. Kit (20) selon l'une des revendications 1 à 3, dans lequel la courbe fermée est de forme générale rectangulaire.

5. Kit (20) selon l'une des revendications 1 à 4, dans lequel le dispositif (10, 30) comporte une pelle (170).

6. Kit (20) selon l'une des revendications 1 à 5, dans lequel au moins une des mâchoires (105, 110) présente une forme globalement rectangulaire, la longueur du petit côté de cette forme rectangulaire étant préférentiellement comprise entre 15 et 25 centimètres.

7. Kit (20) selon l'une des revendications 1 à 6, dans lequel au moins une des mâchoires (105, 110) présente une forme globalement rectangulaire, la longueur du grand côté de cette forme rectangulaire étant préférentiellement comprise entre 21 et 35 centimètres.

8. Kit (20) selon l'une des revendications 1 à 7, dans lequel le dispositif est muni de pieds.

9. Kit (20) selon l'une des revendications 1 à 8, dans lequel le dispositif est muni de fils, cordes ou sangles de suspension.

10. Kit (20) selon l'une des revendications 1 à 9, dans lequel le dispositif est muni d'une ceinture.

11. Kit (20) selon l'une des revendications 1 à 10, dans lequel le dispositif est muni d'une source de lumière, d'une alimentation électrique pour cette source de lumière et d'un interrupteur.

12. Kit (20) selon l'une des revendications 1 à 11, dans lequel le périmètre de l'embouchure du sac en matériau étanche (125) est compris entre 105 et 150 % du périmètre des mâchoires du dispositif (10).

13. Kit (20) selon l'une des revendications 1 à 12, dans lequel le sac formé par un film en matériau étanche (125) comporte un robinet de vidange (140).

14. Kit (20) selon l'une des revendications 1 à 13, dans lequel le sac formé par un film en matériau étanche (125) est en matière plastique au moins partiellement transparente aux longueurs d'onde visible.

15. Kit (20) selon l'une des revendications 1 à 14, dans lequel au moins une mâchoire (105, 110) est fabriquée par moulage.

## Patentansprüche

1. Führungs- und Rückhaltekit (20) von insbesondere flüssigem Material, umfassend:
- wenigstens einen aus einem Film aus einem wasserdichten Material (125) gebildeten Sack und
- wenigstens eine Vorrichtung (10, 30), umfassend auf einer geschlossenen Krümmung:
- eine umlaufende Klemme (105), bezeichnet als "erste Klemme", die ein Profil (115) aufweist,
- eine abnehmbare Klemme (110), bezeichnet als "zweite Klemme" eines Profils (120), das wenigstens teilweise dem Profil (115) der ersten Klemme (105) entspricht, wobei die abnehmbare Klemme wenigstens teilweise um das Profil (115) der ersten Klemme (105) eingreift, um den Film (125) zwischen den genannten Profilen einzuklemmen, und
- einen Handhabungsgriff (130), der fest mit wenigstens einer der Klemmen verbunden ist, um mit der Vorrichtung zu hantieren;
Sack, der einen Öffnungsumfang besitzt, der größer ist als der Umfang der Klemmen der Vorrichtung.

2. Kit (20) gemäß Anspruch 1, bei dem die Krümmung des Profils (115) der ersten Klemme (105) wenigstens zwei Mal das Zeichen ändert.

3. Kit (20) gemäß einem der Ansprüche 1 oder 2, bei dem die geschlossene Krümmung planar ist.

4. Kit (20) gemäß einem der Ansprüche 1 bis 3, bei dem die geschlossene Krümmung eine allgemeine rechteckige Form aufweist.

5. Kit (20) gemäß einem der Ansprüche 1 bis 4, bei dem die Vorrichtung (10, 30) eine Schaufel (170) umfasst.

6. Kit (20) gemäß einem der Ansprüche 1 bis 5, bei dem wenigstens eine der Klemmen (105, 110) eine insgesamt rechteckige Form aufweist, wobei die Länge der kleinen Seite dieser rechteckigen Form bevorzugt zwischen 15 und 25 Zentimetern inbegriffen ist.

7. Kit (20) gemäß einem der Ansprüche 1 bis 6, bei dem wenigstens eine der Klemmen (105, 110) eine insgesamt rechteckige Form aufweist, wobei die Länge der großen Seite dieser rechteckigen Form bevorzugt zwischen 21 und 35 Zentimetern inbegriffen ist.

8. Kit (20) gemäß einem der Ansprüche 1 bis 7, bei dem die Vorrichtung mit Füßen versehen ist.

9. Kit (20) gemäß einem der Ansprüche 1 bis 8, bei dem die Vorrichtung mit Fäden, Seilen oder Aufhängungsgurten versehen ist.

10. Kit (20) gemäß einem der Ansprüche 1 bis 9, bei dem die Vorrichtung mit einem Gürtel versehen ist.

11. Kit (20) gemäß einem der Ansprüche 1 bis 10, bei dem die Vorrichtung mit einer Lichtquelle, einer elektrischen Versorgung für diese Lichtquelle und einem Schalter versehen ist.

12. Kit (20) gemäß einem der Ansprüche 1 bis 11, bei dem der Umfang der Mündung des Sacks aus wasserdichtem Material (125) zwischen 105 und 150 % des Umfangs der Klemmen der Vorrichtung (10) inbegriffen ist.

13. Kit (20) gemäß einem der Ansprüche 1 bis 12, bei dem der durch einen Film aus wasserdichtem Material (125) gebildete Sack einen Ablasshahn (140) umfasst.

14. Kit (20) gemäß einem der Ansprüche 1 bis 13, bei dem der durch einen Film aus wasserdichtem Material (125) gebildete Sack aus wenigstens teilweise für die sichtbaren Wellenlängen transparentem Plastikmaterial ist.

15. Kit (20) gemäß einem der Ansprüche 1 bis 14, bei dem wenigstens eine Klemme (105, 110) per Abformen hergestellt ist.

## Claims

1. Kit (20) for guiding and holding material, notably liquid, comprising:
- at least one bag formed by a film made of an impervious material (125); and
- at least one device (10, 30) comprising, on a closed contour:
- a peripheral jaw (105), referred to as "first jaw", having a profile (115);
- a removable jaw (110), referred to as "second jaw", with a profile (120) that corresponds, at least partially, to the profile (115) of the first jaw (105), the removable jaw fitting at least partially around the profile (115) of the first jaw (105), to clamp the film (125) between said profiles; and
- a manipulating handle (130) secured to at least one of the jaws for manipulating the device;
the opening perimeter of the bag being bigger than the perimeter of the jaws of the device.

2. Kit (20) according to claim 1, wherein the curvature of the profile (115) of the first jaw (105) changes sign at least twice.

3. Kit (20) according to one of claims 1 or 2, wherein the closed contour is planar.

4. Kit (20) according to one of claims 1 to 3, wherein the closed contour has a generally rectangular shape.

5. Kit (20) according to one of claims 1 to 4, wherein the device (10, 30) comprises a blade (170).

6. Kit (20) according to one of claims 1 to 5, wherein at least one of the jaws (105, 110) has a broadly rectangular shape, the length of the shorter side of this rectangle being preferably between 15 and 25 centimeters.

7. Kit (20) according to one of claims 1 to 6, wherein at least one of the jaws (105, 110) has a broadly rectangular shape, the length of the longer side of this rectangle being preferably between 21 and 35 centimeters.

8. Kit (20) according to one of claims 1 to 7, wherein the device is equipped with feet.

9. Kit (20) according to one of claims 1 to 8, wherein the device is equipped with suspension straps, ropes or wires.

10. Kit (20) according to one of claims 1 to 9, wherein the device is equipped with a belt.

11. Kit (20) according to one of claims 1 to 10, wherein the device is equipped with a light source, an electrical power supply for this light source, and a switch.

12. Kit (20) according to one of claims 1 to 11, wherein the perimeter of the opening of the bag (125) made of an impervious material is between 105 and 150% of the perimeter of the jaws of the device (10).

13. Kit (20) according to one of claims 1 to 12, wherein the bag formed by a film made of an impervious material (125) comprises a drain valve (140).

14. Kit (20) according to one of claims 1 to 13, wherein the bag formed by a film made of an impervious material (125) is made of a plastic material at least partially transparent to visible wavelengths.

15. Kit (20) according to one of claims 1 to 14, wherein at least one jaw (105, 110) is produced by molding.
